# EUROPÄISCHE PATENTANMELDUNG

(11) **EP 4 723 342 A2**
(43) Veröffentlichungstag der Anmeldung: **08.04.2026**
(21) Anmeldenummer: 26160584.4
(22) Anmeldetag: 14.05.2018
(51) Int. Cl.: H01M 50/30

(54) **MOBILER CONTAINER ZUM LADEN VON BATTERIEN**

(30) Priorität: 15.05.2017 DE 102017110510
(62) Teilanmeldung aus: 18724854.7
(71) Anmelder: HOPPECKE Batterien GmbH & Co. KG, 59929 Brilon (DE)
(72) Erfinder: Bieker, Mischel, 34431 Marsberg (DE); Weller, Jana, 59969 Hallenberg (DE)
(74) Vertreter: Brinkmann & Partner

(57) **Zusammenfassung**

Die Erfindung betrifft einen mobilen Container zum Laden zumindest einer Batterie (2), mit einer Einhausung (3), die einen Laderaum (4) begrenzt und eine verschließbare Ladeöffnung (5) aufweist, einem im Laderaum (49 angeordneten Batterieladeplatz (10), der eine Aufnahme für einen Energiewandler (12) und eine Batterieaufnahme (13) aufweist, in die eine Batterie (2) über die Ladeöffnung einbringbar ist.

## Beschreibung

Die vorliegende Erfindung betrifft einen mobilen Container zum Laden und Lagern zumindest einer Batterie, insbesondere eines elektrochemischen Energiespeichers, wobei der Container eine Einhausung aufweist, die einen Laderaum begrenzt und innerhalb der Einhausung die Batterie angeordnet ist. Des Weiteren bezieht sich die Erfindung auf ein System mit mehreren zuvor genannten mobilen Containern.

Es sind aus dem Stand der Technik Lagersysteme bekannt, in denen Batterien, eingebracht werden, bevor diese Batterien dort aufgeladen werden. Die US 6,094,028 offenbart beispielsweise eine derartige Vorrichtung. Nachteilig ist, dass dieses System konstruktiv aufwändig ist und für einige Anwendungsfälle zu unflexibel ist.

Es ist daher eine Aufgabe der vorliegenden Erfindung, die voranstehend beschriebenen Nachteile zumindest teilweise zu beheben. Insbesondere ist es Aufgabe der vorliegenden Erfindung, eine Vorrichtung zu schaffen, die eine flexible Möglichkeit schafft, Batterien, die zumindest teilweise entladen sind, in einem sicheren Raum zu lagern und vor Ort aufzuladen.

Die voranstehende Aufgabe wird gelöst durch einen mobilen Container gemäß sämtlicher Merkmale des unabhängigen Anspruchs sowie durch ein System mit sämtlichen Merkmalen des dazugehörigen, unabhängigen Anspruchs. Weitere Merkmale und Details der Erfindung ergeben sich aus den jeweiligen Unteransprüchen, der Beschreibung und den Zeichnungen. Dabei gelten Merkmale und Details, die im Zusammenhang mit dem erfindungsgemäßen Patentansprüchen beschrieben sind, selbstverständlich auch im Zusammenhang mit dem erfindungsgemäßen mobilen Container sowie dem erfindungsgemäßen System, und jeweils umgekehrt, so dass bezüglich der Offenbarung zu den einzelnen Erfindungsaspekten stets wechselseitig Bezug genommen wird bzw. werden kann.

Die Aufgabe wird insbesondere gelöst durch einen mobilen Container zum Laden, und insbesondere Lagern, zumindest einer Batterie. Die Batterie kann auch als elektrochemischer Energiespeicher ausgebildet sein. Hierbei weist der Container eine Einhausung auf, die einen Laderaum begrenzt und eine verschließbare Ladeöffnung aufweist. Im Laderaum ist ein Batterieladeplatz angeordnet, der eine Aufnahme für einen Energiewandler und eine Batterieaufnahme aufweist, in die eine Batterie über die Ladeöffnung einbringbar ist. Der Energiewandler kann auch als Ladegerät ausgeführt sein.

Der Batterieladeplatz sorgt dafür, dass zum einen der Energiewandler als auch zum anderen die Batterie zuverlässig innerhalb des Laderaums angeordnet sind. Der Laderaum lässt sich verschließen, beispielsweise über ein Schließelement, so dass der Laderaum im verschlossenen Zustand des Containers zuverlässig vor Umwelteinflüssen, wie Feuchtigkeit, Staub, etc. geschützt ist. Bei der Batterie handelt es sich um eine wiederaufladbare Batterie oder Energiespeicher, insbesondere einen Akkumulator, der nach einem definierten Aufladezyklus durch den Benutzer aus dem Container entnommen werden kann. Vorzugsweise umfasst die Batterie somit einen elektrochemischen Energiespeicher. Bei dem erfindungsgemäßen Container handelt es sich um einen mobilen Container, der individuell je nach Anforderungsprofil an unterschiedliche Positionen, insbesondere innerhalb und/oder außerhalb eines Gebäudes, aufgestellt werden kann. Vorteilhafterweise kann ein Gestell vorgesehen sein, in dem der Batterieladeplatz mit Aufnahme für den Energiewandler und mit Batterieaufnahme integriert ist. Das Gestell kann zum Beispiel aus Metall ausgeführt sein, wobei dieses Gestell individuell in seinen Dimensionen veränderbar ist, welches von der Geometrie der aufzuladenden Batterien und/oder des Energiewandlers unter anderem abhängt. Das Gestell kann z. B. an einer Innenseite der Einhausung befestigt sein, wodurch die Standqualität der einzelnen Komponenten verbessert wird.

Ebenfalls Gegenstand der Erfindung ist ein System mit einem mobilen Container mit einem erfindungsgemäßen mobilen Container, wobei eine Hauptsteuerung vorgesehen ist, die mit zumindest einer Sende- und/oder Empfangseinheit eines jeden Containers oder mit einer Steuereinheit eines jeden Containers in Datenkommunikation steht. Ein Vorteil dieses Systems ist, dass sämtliche Container miteinander kommunizieren können. Das erfindungsgemäße System erhält Informationen, zum Beispiel wie groß die Anzahl von im Container vorhandenen Batterien ist. Zudem ist es denkbar, dass ebenfalls der Ladezustand jeder einzelnen Batterie dem System als Information übergeben wird. Die Hauptsteuerung kann unabhängig vom Container positioniert sein, beispielsweise in einer externen Hauptzentrale, die beispielsweise auch eine Datencloud sein kann. Ebenfalls kann ein mobiler Container die Hauptzentrale aufweisen. Es kann auch sinnvoll sein, dass jeder mobiler Container seine eigene Steuereinheit aufweist, wobei die einzelnen Steuereinheiten über die Sende- und/oder Empfangseinheiten miteinander kommunizieren.

Vorteilhafterweise kann bei der Erfindung vorgesehen sein, dass die Lüftungsanlage derart im Laderaum positioniert und ausgebildet ist, dass eine Querbelüftung des Laderaumes erzielbar ist. Hierbei ist die Lüftungsanlage zu dem eingesetzten Ladekonzept der Batterien passend dimensioniert. Hierdurch kann wirkungsvoll erzielt werden, dass insbesondere das Wasserstoffniveau im Laderaum im Normbereich verbleibt. Etwaige austretende Gase, beispielsweise aus der Batterie, können wirksam durch die Lüftungsanlage abgesaugt werden. Es hat sich gezeigt, dass eine Querbelüftung besonders effektiv ist, um schädliche Gase aus dem Laderaum abzusaugen. Erfindungsgemäß weist der Container eine längliche, entlang seiner Standfläche verlaufende Erstreckung auf, wobei die Querbelüftung im Wesentlichen entlang der länglichen Erstreckung des Containers, insbesondere des Laderaums erfolgt.

Erfindungsgemäß kann vorgesehen sein, dass eine Lüftungsanlage vorgesehen ist, um während des Ladevorgangs der Batterie entstehende Gase aus dem Laderaum abzusaugen, insbesondere dass die Lüftungsanlage einen Abluftbereich und einen Zuluftbereich aufweist, wobei zumindest der Abluftbereich einen Lüfter zur aktiven Absaugung aufweist. Hierdurch lässt sich ebenfalls eine Querbelüftung des Laderaums erzielen. Besonders wirksam ist, dass der Zuluftbereich in der Nähe des Bodens des Containers positioniert ist und der Abluftbereich in der Nähe des Daches vorgesehen ist. Eine wirksame Querbelüftung kann dadurch erzielt werden, wenn der Zuluftbereich zu dem Abluftbereich an möglichst gegenüberliegenden, weit entfernten Positionen innerhalb der Einhausung vorgesehen sind. Beispielsweise kann der Abluftbereich diagonal zum Zuluftbereich innerhalb der Einhausung positioniert sein.

Es kann von Vorteil sein, wenn im Rahmen der Erfindung ein Energieversorgungssystem innerhalb des Laderaumes angeordnet ist, welches mit dem Energiewandler elektrisch verbindbar ist. Das Energieversorgungssystem bietet hohe Flexibilität und Wirtschaftlichkeit, da es leicht zugänglich für weitere Komponenten innerhalb der Einhausung ist, bzw. die genannten Komponenten einfach mit dem Energieversorgungssystem elektrisch verbunden werden können. Beispielsweise kann es vorteilhaft sein, Netzsteckdosen in der Nähe des Energiewandlers zu positionieren, wobei das Energieversorgungssystem integrierte, elektrische Versorgungsleitungen aufweist, die vorteilhafterweise modulmäßig erweiterbar sind.

Von weiterem Vorteil kann vorgesehen sein, dass die Lüftungsanlage eine Überwachungseinheit aufweist, um eine Luftströmung in der Lüftungsanlage zu überprüfen. Vorteilhafterweise wird der Abluftstrom überprüft. Falls die Luftströmung unterhalb eines Grenzwertes liegt, wird das Energieversorgungssystem stromlos geschaltet, dass bedeutet, eine Ladung der Batterien wird gestoppt.

Ferner kann es vorgesehen sein, dass die Überwachungseinheit einen Sensor aufweist, wodurch bei einer Grenzwertunterschreitung der Luftströmung das Energieversorgungssystem stromlos geschaltet wird. Hierbei kann der Sensor beispielsweise ein Differenzdrucksensor sein.

Es kann möglich sein, dass eine Gasüberwachungseinheit im Laderaum vorgesehen ist, um eine Explosionsfähigkeit eines Gas-Luft-Gemisches innerhalb des Laderaums zu detektieren, insbesondere dass bei Erreichen eines Gas-Luft-Gemisch-Grenzwertes das Energieversorgungssystem stromlos geschaltet wird. Zusätzlich zur Überwachungseinheit kann die Gasüberwachungseinheit im Container integriert sein, die das Gas-Luft-Gemisch innerhalb des Laderaums überprüft. Falls ein definierter Grenzwert des Gas-Luft-Gemisches erreicht wird, wird auch hier wie bei der Überwachungseinheit aus Sicherheitsgründen das Energieversorgungssystem stromlos geschaltet, dass bedeutet, dass der Ladevorgang der Batterie unterbrochen wird. Beispielsweise kann die Gasüberwachungseinheit Explosionsgrenzen des Gas-Luft-Gemisches messen, und zum Beispiel beim Erreichen des oberen und/oder des unteren Explosionsgrenzwert (OEG-Wert oder UEG-Wert) eine definierte Aktion durchführen.

Vorteilhafterweise kann bei der Erfindung vorgesehen sein, dass die Einhausung einen Alarmgeber aufweist, um ein optisches und/oder akustisches Signal abzugeben, insbesondere dass der Alarmgeber mit der Gasüberwachungseinheit und/oder der Überwachungseinheit der Lüftungsanlage in Signalverbindung steht. Vorteilhafterweise erhält der Benutzer eine optische und/oder akustische Rückmeldung, falls Unregelmäßigkeiten während des Ladeprozesses der Batterie innerhalb des Containers vorliegen. Der Alarmgeber kann zusätzlich oder alternativ auch ein Signal abgeben, welches von einer elektronischen Einheit empfangbar ist und als Alarmsignal erkannt wird.

Von weiterem Vorteil kann vorgesehen sein, dass die Batterieaufnahme eine Auflagefläche für die Batterie aufweist, die es ermöglicht, translatorisch die Batterie in der Batterieaufnahme zu bewegen, insbesondere dass die Auflagefläche beweglich gelagerte Transportelemente aufweist. Vorteilhafterweise bietet die erfindungsgemäße Auflagefläche die Möglichkeit, die Batterie bequem und zügig in die Batterieaufnahme hineinzubewegen bzw. aus der Batterieaufnahme zu entnehmen. Da in einigen Anwendungsfällen die Batterien eine hohe Gewichtskraft aufweisen, ist die erfindungsgemäße Auflagefläche zur translatorischen Bewegung der Batterie besonders vorteilhaft. In einer möglichen erfindungsgemäßen Gestaltung der Erfindung sind mehrere parallel zueinander angeordnete Transportelemente vorgesehen, die eine leichte Bewegung der Batterie auf der Auflagefläche bzw. im Batterieladeplatz ermöglichen.

Es kann es vorgesehen sein, dass das Transportelement zylindrisch ausgebildet ist. Beispielsweise sind die Transportelemente Rollen, auf die eine oder mehrere Batterien positionierbar sind. Eine translatorische Bewegung der Batterie auf der Auflagefläche ist in unterschiedliche Richtungen denkbar.

Vorteilhafterweise ist die Lüftungsanlage dauerhaft in Betrieb. Hierdurch wird die Sicherheit des Containers erhöht.

Es kann möglich sein, dass der Laderaum ein Klimagerät aufweist, wobei insbesondere das Klimagerät derart ausgebildet ist, dass der Laderaum auf eine Temperatur von zwischen 5°C und 30°C einstellbar ist. Vorteilhafterweise ist das Klimagerät derart ausgelegt, dass Temperaturen zwischen 10° und 25° einstellbar sind. Über eine Temperatureinstellung können hierdurch die sich innerhalb des Containers befindenden elektrischen Komponenten, insbesondere Batterien, Energiewandler geschützt werden. Zudem kann das Klimagerät derart ausgeführt sein, dass ferner eine relative Luftfeuchte innerhalb der Einhausung einstellbar ist, wobei insbesondere eine Luftfeuchte bis zu 95% bei ungefähr 20° bis 25° erreicht werden kann. Auch eine Einstellung der relativen Luftfeuchte kann den Alterungsprozess von elektrischen Komponenten innerhalb der Einhausung, wie Energiewandler oder Batterie begünstigen, bzw. verlangsamen. Vorteilhafterweise kann bei der Erfindung vorgesehen sein, dass unterhalb der Batterieaufnahme eine Auffangvorrichtung angeordnet ist, um eventuell austretendes Medium aus der Batterie und/oder Ladegerat aufzufangen, insbesondere das die Auffangvorrichtung aus Kunststoff ausgeführt ist. Die Auffangvorrichtung kann eine Kavität aufweisen, insbesondere als eine Wanne ausgebildet sein. Die Batterieaufnahme weist Durchgangsöffnungen auf, so dass eventuell austretendes Medium aus der Batterie, wie beispielsweise Säure sofort in die Auffangvorrichtung gelangen kann.

Es kann von Vorteil sein, wenn im Rahmen der Erfindung ein Schließelement vorgesehen ist, um die Ladeöffnung zu schließen und zu öffnen, insbesondere dass das Schließelement eine Schiebetür oder ein Rolltor oder eine Flügeltür ist. Befindet sich das Schließelement in geöffnetem Zustand, ist ein freier Zugang an die Batterie bzw. Batterien im Laderaum denkbar. Das Be- und Entladen des Containers kann zum Beispiel über ein motorisiertes Fahrzeug mit einer Hubvorrichtung erfolgen, beispielsweise mit Hilfe eines gabelstaplerartigen Fahrzeugs und dazugehörigen Hebegeschirr. Weiterhin kann beispielsweise die Be- und Entladung über spezielle Wechselvorrichtungen in translatorischer Bewegung erfolgen. Die große Ladeöffnung ermöglicht, dass ein einfacher Zugang an sämtliche Batterien innerhalb des Containers realisierbar ist.

Von weiterem Vorteil kann vorgesehen sein, dass der Batterieladeplatz ein Bodenelement aufweist, auf das der Energiewandler positionierbar ist, wobei insbesondere das Bodenelement oberhalb der Batterieaufnahme angeordnet ist. Hierbei kann das Bodenelement beispielsweise an einer Rückwand oder Seitenwand befestigt sein. In einer möglichen Ausführungsform befindet sich das Bodenelement ungefähr auf der mittleren Höhe innerhalb des Laderaums, wodurch ein Sicherheitsabstand zu den darunter positionierten Batterien sich einstellt.

Ferner kann es vorgesehen sein, dass das Energieversorgungssystem ein Schienenelement, insbesondere eine Stromschiene aufweist, wobei das Schienenelement zur elektrischen Versorgung des Energiewandlers dient, insbesondere dass das Bodenelement zwischen dem Schienenelement und der Batterieaufnahme angeordnet ist. Das Schienenelement kann entsprechend der Abmaße und der Geometrie des Containers erweitert werden, wobei innerhalb des Schienenelementes elektrische Versorgungsleitungen, Steckdosen, insbesondere zum individuellen Anschließen der Energiewandler vorgesehen sein können.

Es kann möglich sein, dass der Laderaum eine Wassernachfüllstation aufweist. Hierbei kann die Einhausung ein Lagerelement aufweisen, auf das die Wassernachfüllstation positioniert werden kann bzw. befestigt werden kann. Die Wassernachfüllstation kann als Reservoir für die Batterien dienen. Falls eine Batterie zu wenig Wasser aufweist, kann eine manuelle oder automatische Wassernachfüllung über die Wassernachfüllstation erfolgen. Inwieweit die Batterie genügend Wasser aufweist, kann über eine Detektionseinheit erfolgen, die innerhalb des Laderaums angeordnet ist. Die Wassernachfüllstation kann durch Anschluss von Leitungswasser zur Herstellung und Lagerung von demineralisierten Nachfüllwasser für Batterien verwendet werden.

Vorteilhaft ist es darüber hinaus, wenn im Rahmen der Erfindung der Batterieladeplatz ein Sicherungselement aufweist, um eine Rückwand der Einhausung zu schützen. Das Sicherungselement kann zum Beispiel an einer Seitenwand oder am Boden oder an der Rückwand der Einhausung angeordnet sein. Vorteilhafterweise ist das Sicherungselement aus einem metallischen Material ausgeführt. Wird die Batterie in den Laderaum eingebracht und in die Batterieaufnahme geschoben und bewegt, verhindert das Sicherungselement, dass die Batterie mit der Rückwand oder einer der Wände der Einhausung kollidiert. Denkbar ist, dass das Sicherungselement beabstandet zu einer der Wände der Einhausung angeordnet ist.

Es kann im Rahmen der Erfindung denkbar sein, dass eine Löschvorrichtung innerhalb des Laderaumes vorgesehen ist, insbesondere dass die Löschvorrichtung als Sprinkleranlage ausgeführt ist. Denkbar ist, dass die Löschvorrichtung bei extremer Hitzeentwicklung innerhalb des Laderaums auslöst. Zusätzlich kann der Alarmgeber ein entsprechendes Signal auslösen, insbesondere optisch oder akustisch. Die Löschvorrichtung ist vorteilhafterweise an der Decke der Einhausung angeordnet. Vorteilhafterweise erfolgt bei einer Aktivierung der Löschvorrichtung ein sofortiges Stromlosschalten des Energieversorgungssystems aller elektrischen Komponenten innerhalb des Containers, insbesondere des Ladevorgangs der Batterien.

Ferner kann es im Rahmen der Erfindung vorgesehen sein, dass ein regeneratives Energiesystem vorgesehen ist, das mit dem Energieversorgungssystem und/oder dem Energiewandler verbunden ist, insbesondere dass das regeneratives Energiesystem auf dem Dach der Einhausung angeordnet ist. Vorteilhafterweise kann die Einbindung des regenerativen Energiesystems eine wirksame Unterstützung zur Ladung der Batterien darstellen. Ebenfalls kann das regenerative Energiesystem das Energieversorgungssystem unterstützen. Überschüssige Energie kann selbstverständlich ins allgemeine Netz zurückgespeist werden, die über das regenerative Energiesystem gewonnen wird. Bei dem regenerativen Energiesystem kann es sich zum Beispiel um Fotovoltaikzellen handeln.

Zudem ist im Rahmen der Erfindung denkbar, dass ein Anzeigeelement vorgesehen ist, das eine Belegung oder Nichtbelegung des Batterieladeplatzes mit einer Batterie anzeigt und/oder den Ladezustand der Batterie anzeigt. Das Anzeigeelement kann ein Display sein, mit dem sämtliche Informationen anzeigbar sind. Ebenfalls kann das Anzeigeelement ein Farbelement sein, das unterschiedliche Farben emittieren kann, um den Belegungsstatus des Batterieladeplatzes oder den Ladezustand der Batterie, insbesondere vor dem Laden, während des Ladens oder nach dem Ladevorgang anzeigt.

In einer weiteren Möglichkeit kann vorgesehen sein, dass das Anzeigeelement im Laderaum oder außerhalb des Laderaumes an der Einhausung angeordnet ist. Das Anzeigeelement kann außerhalb auf dem Dach oder seitlich an den Wänden der Anhausung befestigt sein. Das Anzeigeelement ist ebenfalls innerhalb des Laderaums positionierbar, wobei beispielsweise das Anzeigeelement am Bodenelement, am Gestell oder an den Wänden der Einhausung angeordnet sein kann.

Vorteilhafterweise ist es möglich, dass eine Steuereinheit vorgesehen ist, die mit dem Energieversorgungssystem und/oder der Lüftungsanlage und/oder der Überwachungseinheit und/oder dem Anzeigeelement und/oder dem Alarmgeber und/oder der Gasüberwachungseinheit und/oder dem Klimagerät und/oder der Löschvorrichtung und/oder dem regenerativen Energiesystem in Signalverbindung steht. Die Steuereinheit kann an der Wandung der Einhausung befestigt sein oder im Energiewandler integriert sein.

Es kann im Rahmen der Erfindung vorgesehen sein, dass an der Einhausung eine Sende- und/oder Empfangseinheit angeordnet ist, die insbesondere mit der Steuereinheit und/oder dem Energieversorgungssystem und/oder der Lüftungsanlage und/oder der Überwachungseinheit und/oder dem Anzeigeelement und/oder dem Alarmgeber und/oder der Gasüberwachungseinheit und/oder dem Klimagerät und/oder der Löschvorrichtung und/oder dem regenerativen Energiesystem in Signalverbindung steht. Die Sende- und/oder Empfangseinheit kann innerhalb einer Wandung der Einhausung integriert sein. Ebenfalls ist es denkbar, dass die Sende- und/oder Empfangseinheit am Dach des Containers positioniert ist.

Ferner ist es denkbar, dass eine Vielzahl an Batterieladeplätzen innerhalb des Laderaumes vorgesehen sind. Somit ist es möglich, dass gleichzeitig mehrere Batterien im Container geladen werden. Vorteilhafterweise ist jede Batterie mit ihrem dazugehörigen Energiewandler elektrisch verbunden. Erfindungsgemäß befinden sich die Batterien auf der Batterieaufnahme und weisen einen definierten Abstand zueinander auf.

Zusätzlicher Gegenstand der Erfindung ist ein System, welches mehrere mobile Container der erfindungsgemäßen Art aufweist. Hierbei ist eine Hauptsteuerung vorgesehen, die mit zumindest einer Sende- und/oder Empfangseinheit eines jeden Containers oder mit der Steuereinheit eines jeden Containers in Datenkommunikation steht. Damit bringt das erfindungsgemäße System mehrerer Container die gleichen Vorteile mit sich, wie sie ausführlich zum erfindungsgemäßen einzelnen Container beschrieben sind.

Zudem kann eine Zugangskontrolle vorgesehen sein, die lediglich einen Zugang in den Container für befugtes Bedienpersonal zulässt. Der Container kann ein Verschlusssystem aufweisen, das den Zugang an die Batterieladeplätze steuert und/oder regelt. Das Verschlusssystem kann einen Schließzylinder und/oder ein Keypad und/oder ein RFID aufweisen, wodurch ein Zugang ermöglicht oder verhindert werden kann.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
Fig. 1 eine schematische Darstellung eines erfindungsgemäßen mobilen Containers,
Fig. 2 eine weitere Darstellung eines erfindungsgemäßen Containers,
Fig. 3 ein weiteres Ausführungsbeispiel einer Batterieaufnahme eines mobilen Containers,
Fig. 4 ein weiteres Ausführungsbeispiel in schematischer Darstellung eines mobilen Containers mit einem regenerativen Energiesystem und
Fig. 5 eine schematische Ansicht auf ein erfindungsgemäßes System mit mehreren mobilen Containern.

In den nachfolgenden Figuren werden für die gleichen technischen Merkmale auch von unterschiedlichen Ausführungsbeispielen die identischen Bezugszeichen verwendet.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

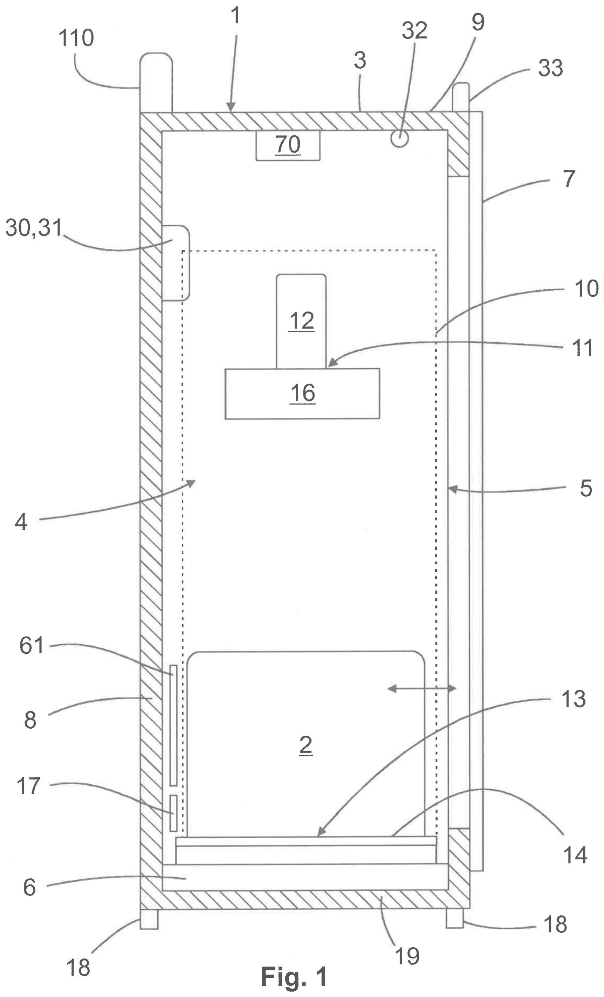

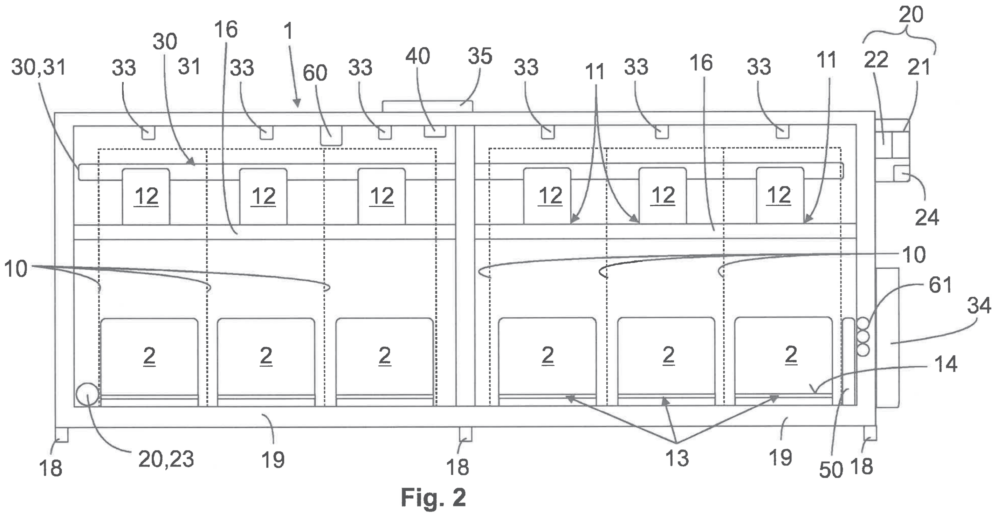

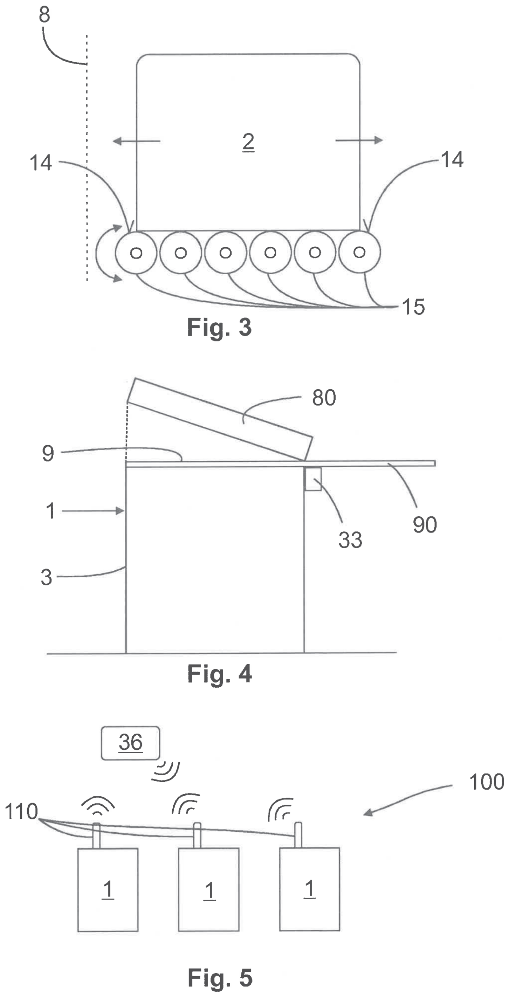

In Fig. 1 und Fig. 2 sind mobile Container 1 dargestellt, die eine Einhausung 3 aufweisen, wobei die Einhausung 3 einen Laderaum 4 begrenzt. Der Laderaum 4 weist über ein Schließelement 7 eine verschließbare Ladeöffnung 5 auf. In dem Laderaum 4 befindet sich ein Batterieladeplatz 10, der eine Aufnahme 11 und eine Batterieaufnahme 13 aufweist. In der Aufnahme 11 ist ein Energiewandler 12 positionierbar und in der Batterieaufnahme 13 befindet sich eine Batterie 2, wobei es bei der Batterie 2 sich um eine wiederaufladbare Batterie handelt. Die Batterie 2 ist über die Ladeöffnung 5 in den Container 1 einbringbar beziehungsweise aus dem Container 1 entnehmbar. Die Batterie 2 befindet sich auf einer Auflagefläche 14 der Aufnahme 11. Die Auflagefläche 14 ermöglicht es die Batterie 2 translatorisch in der Batterieaufnahme 13 zu bewegen, wobei die Bewegungsrichtung in Fig. 1 durch die Pfeildarstellung gezeigt ist. Die Auflagefläche 14 kann beispielsweise durch beweglich gelagerte Transportelemente 15 gebildet sein, die vereinfacht in Fig. 3 dargestellt sind. Die Transportelemente 15 sind beispielsweise Rollen, insbesondere zylindrisch ausgebildet, wodurch eine zuverlässige Bewegung der einzelnen Batterien 2 innerhalb des Batterieladeplatzes 10 möglich ist. Die Batterieaufnahme 13 kann auch mit Kugellagern ausgeführt sein.

Zudem weist der mobile Container 1 eine Lüftungsanlage 20 auf, die in Fig. 2 dargestellt ist. Während des Ladevorganges der Batterien 2 werden evtl. entstehende Gase, die beispielsweise aus den Batterien 2 entweichen können, aus dem Laderaum 4 abgesaugt. Beispielsweise ist es denkbar, dass die Lüftungsanlage 20 aus Sicherheitsgründen permanent in Betrieb ist. Beispielsweise ist es denkbar, dass die Lüftungsanlage 20 einen Abluftbereich 21 sowie einen Zuluftbereich 23 aufweist, wodurch eine zuverlässige Querbelüftung des Laderaumes 4 erzielbar ist. Eine Querbelüftung bewirkt eine zufriedenstellende Abfuhr von möglicherweise innerhalb des Laderaumes 4 entstehenden Gase.

Beispielsweise kann der Abluftbereich 21 mit einem Lüfter 22 zur aktiven Absaugung ausgestattet sein, welches in Fig. 2 dargestellt ist. Ebenfalls ist eine Positionierung eines weiteren Lüfters im Zuluftbereich 23 denkbar.

Wie in Fig. 1 und Fig. 2 gezeigt ist, weist der mobile Container 1 ein Energieversorgungssystem 30 innerhalb des Laderaumes 4 auf, wodurch eine zuverlässige Energieversorgung sämtlicher elektronischer Geräte und Vorrichtungen im oder am Container 1 durchführbar beziehungsweise realisierbar ist. Das Energieversorgungssystem 30 ist mit einem Schienensystem 31 ausgebildet, welches quer entlang der Längserstreckung des mobilen Containers 1 verläuft, wobei die Positionierung des Schienenelements 31 in der Nähe der Energiewandler 12 erfolgt. Die Energiewandler 12 sind mit dem Schienenelement 31 elektrisch verbunden. Das Energieversorgungssystem 30 kann auch Steckdosen zum elektrischen Anschluss der Energiewandler 12 aufweisen.

Die Lüftungsanlage 20 weist eine Überwachungseinheit 24 auf, die die Luftströmung in der Lüftungsanlage 20 überprüft. Erkennt die Überwachungseinheit 24, dass eine Grenzwertunterschreitung der Luftströmung vorliegt, wird aus Sicherheitsgründen das Energieversorgungssystem 30 stromlos geschaltet, insbesondere erfolgt keine Ladung der Batterien 2 mehr. Über einen Alarmgeber 35 kann ein entsprechendes Alarmsignal abgegeben werden, wobei das Signal optisch und/oder akustisch beispielsweise erfolgen kann.

Es ist denkbar, dass eine Gasüberwachungseinheit 40 im Laderaum 4 platziert ist, um eine Explosionseinheit des Gas-Luft-Gemisches innerhalb des Laderaumes 4 zu detektieren. Erreicht das Gas-Luft-Gemisch einen Grenzwert, erfolgt ebenfalls eine Stromlosschaltung des Energieversorgungssystems 30, insbesondere wird eine Ladung der Batterien über die Energiewandler gestoppt. Auch hier ist es denkbar, dass der Alarmgeber 35 ein entsprechendes Alarmsignal, beispielsweise optisch und/oder akustisch abgibt.

Die Lebensdauer der einzelnen elektronischen Geräte innerhalb des Containers 1 kann dadurch verbessert werden, wenn eine gewisse Temperatur während des Ladebetriebs innerhalb des Laderaumes 4 eingehalten wird. Hierfür kann ein Klimagerät 60 innerhalb des Laderaumes 4 angeordnet sein. Gemäß Fig. 2 ist das Klimagerät 60 am Dach 9 der Einhausung 3 befestigt. Das Klimagerät 60 kann zusätzlich mit einer Heizung 61 zusammenwirken, die sich in Fig. 2 innerhalb der Seitenwände und/oder Rückwände der Einhausung 3 befinden kann.

Zu Sicherheitszwecken ist eine Löschvorrichtung 70 am Dach 9 innerhalb des Laderaumes 4 positioniert.

Unterhalb der Batterieaufnahme 13 befindet sich eine Auffangvorrichtung 6, um evtl. austretendes Medium aus der Batterie 2 und/oder aus dem Energiewandler 12 aufzufangen. Das Schließelement 7 gemäß Fig. 1 kann zum Beispiel eine Schiebetür, ein Rolltor oder eine Flügeltür sein. Die Energiewandler 12 befinden sich auf einem Bodenelement 16, das oberhalb der Batterieaufnahme 13 positioniert ist. In Fig. 2 ist zudem eine Wassernachfüllstation 50 im Laderaum 4 positioniert. Falls eine Batterie 2 zu wenig Wasser aufweist, kann über die Wassernachfüllstation 50 eine manuelle oder eine automatische Befüllung der Batterien 2 erfolgen.

In Fig. 1 ist schematisch ein Sicherungselement 17 gezeigt, welches sich im Batterieladeplatz 10 befindet. Das Sicherungselement 17 dient als Schutz für die Wandung der Einhausung 3, insbesondere für die Rückwand 8 .

In Fig. 2 sind des Weiteren mehrere Anzeigeelemente 32 dargestellt, die beispielsweise eine Belegung oder Nichtbelegung des Batterieladeplatzes 10 mit einer Batterie 2 anzeigen können, oder den Ladezustand der Batterie 2 visualisieren. Ist beispielsweise eine Batterie 2 aufgeladen, kann das Anzeigeelement 33 grünes Licht oder Zeichen emittieren. Ist eine Batterie 2 nur teilweise geladen, emittiert das Anzeigeelement 33 beispielsweise eine rote Farbe oder ein weiteres Zeichen. Eine Belegung der Nichtbelegung des Batterieladeplatzes 10 kann zum Beispiel über weitere Farben oder Zeichen erfolgen. Selbstverständlich kann das Anzeigeelement 33 über ein Display erfolgen, wodurch auf andere Weise eine Belegung und/oder Nichtbelegung des Batterieplatzes sowie der Ladezustand der Batterie 2 visualisiert werden kann. Jeder Batterieladeplatz 10 weist hierbei ein eigenes Anzeigeelement 33 auf. Das Anzeigeelement 33 befindet sich innerhalb des Laderaumes 4 am Dach 9 der Einhausung 3 . Selbstverständlich kann das Anzeigeelement 33 auch an unterschiedlichen Positionen innerhalb des jeweiligen Batterieladeplatzes 10 angeordnet werden, beispielsweise am Energieversorgungssystem 30, Schienenelement 31, Steuereinheit 34, oder am Bodenelement 16 .

Alternativ und/oder zusätzlich kann das Anzeigeelement 33 auch außerhalb des Laderaumes 4 an der Einhausung 3 angeordnet werden, was schematisch in Fig. 4 gezeigt ist. Ebenfalls kann nur ein Anzeigeelement 33 für alle Batterieladeplätze 10 vorgesehen sein.

Fig. 4 zeigt ein weiteres Ausführungsbeispiel, bei dem ein regeneratives Energiesystem 80 vorgesehen ist, das auf dem Dach 9 der Einhausung 3 angeordnet ist. Das Dach 9 kann ein Schleppdach 90 aufweisen, welches nach rechts über die Abmaße des mobilen Containers 1 hinausragt, das bedeutet, dass das Schleppdach 90 eine Ausladung von beispielsweise 1m bis 2m aufweisen kann. Das Schleppdach 90 dient als Schutz vor Regen und/oder Schnee und verläuft vorteilhafterweise über die gesamte Breite des Containers 1 . Dieses Schleppdach 90 begünstigt ferner, dass eine Aufheizung des Laderaumes 4 durch die Sonneneinstrahlung reduziert wird. Das regenerative Energiesystem 80 ist vorteilhafterweise mit dem Energieversorgungssystem 30 verbunden und kann somit Energie für das Laden der Batterien 2 bereitstellen.

In Fig. 2 ist eine Steuereinheit 34 dargestellt, die an der Einhausung 3 außerhalb des

Containers 1 angeordnet ist. Die Steuereinheit 34 ist mit dem Energieversorgungssystem 30 elektrisch verbunden. Vorteilhafterweise besteht eine Signalverbindung auch zu der Lüftungsanlage 20 und/oder der Überwachungseinheit 24 und/oder dem Anzeigeelement 33 und/oder dem Alarmgeber 35 und/oder der Gasüberwachungseinheit 40 und/oder dem Klimagerät 60 und/oder der Löschvorrichtung 70 und/oder dem regenerativen Energiesystem 80 . Zudem kann die Steuereinheit 34 mit einer Sende- und/oder Empfangseinheit 110 in Signalverbindung stehen, welches in Fig. 1, Fig. 2 und Fig. 5 gezeigt ist.

Gemäß Fig. 5 bezieht sich die Erfindung auf ein System 100, das aus mehreren Containern 1 ausgeführt sein kann, wobei sämtliche Container 1 in Signalverbindung über die jeweilige Sende- und/oder Empfangseinheit 110 stehen. Es können sämtliche Daten untereinander ausgetauscht werden, wie beispielsweise der Ladezustand der einzelnen Batterien 2 oder wie die Auslastung der Batterieladeplätze 10 ist. Beispielsweise ist es denkbar, dass eine Hauptsteuerung 36 im System 100 integriert ist, die diese Informationen der einzelnen mobilen Container 1 sammelt, weiterleitet, insbesondere an Dritte übergibt, wie beispielsweise einer Datencloud. In einem praktischen Ausführungsbeispiel kann der Benutzer Informationen erhalten, wie der aktuelle Ladezustand sowie die aktuelle Auslastung aller Container 1 ist. Der Benutzer kann die Information von dem erfindungsgemäßen System 100 erhalten, und zwar in welchem Container 1 der Benutzer seine passende aufgeladene Batterie 1 erhält und entnehmen kann. Oder in welchen Container 1 er seine entladene Batterie 1 einbringen kann.

In Fig. 1 ist des Weiteren eine Beleuchtung 32 vorgesehen, die innerhalb des Containers 1 am Dach 9 der Einhausung 3 befestigt ist. Die Beleuchtung 32 kann über einen Taster ein- oder ausgeschaltet werden, oder alternativ über ein Zeitglied automatisch betrieben werden. Ebenfalls kann die Beleuchtung 32 automatisch, mit beispielsweise eines Bewegungsmelders, ein- oder ausgeschaltet werden. Damit der Container 1 einfach und ohne Aufwand versetzt werden kann, sind an seiner Unterseite Standelemente 18, insbesondere Füße, vorgesehen, sodass beispielsweise über einen Gabelstapler der Container 1 versetzt werden kann. Der Gabelstapler kann unterhalb der Bodenwand 19 der Einhausung 3 mit seinen Tragarmen hineinfahren und somit den mobilen Container 1 anheben und bewegen. An dem Dach 9 können Kraftangriffselemente, insbesondere Ösen vorgesehen sein, so dass der Container 1 mittels eines Kranes und den dazugehörigen Hebelaschen oder Ketten in der Position versetzt werden kann.

### Bezugszeichen

1 : mobiler Container
2 : Batterie
3 : Einhausung
4 : Laderaum
5 : Ladeöffnung
6 : Auffangvorrichtung
7 : Schließelement
8 : Rückwand
9 : Dach
10 : Batterieladeplatz
11 : Aufnahme
12 : Energiewandler
13 : Batterieaufnahme
14 : Auflagefläche
15 : Transportelement
16 : Bodenelement
17 : Sicherungselement
18 : Standelement
19 : Bodenwand
20 : Lüftungsanlage
21 : Abluftbereich
22 : Lüfter
23 : Zuluftbereich
24 : Überwachungseinheit
30 : Energieversorgungssystem
31 : Schienenelement
32 : Beleuchtung
33 : Anzeigeelement
34 : Steuereinheit
35 : Alarmgeber
36 : Hauptsteuerung
40 : Gasüberwachungseinheit
50 : Wassernachfüllstation
60 : Klimagerät
61 : Heizung
70 : Löschvorrichtung
80 : regeneratives Energiesystem
90 : Schleppdach
100 : System
110 : Sende-und/oder Empfangseinheit

## Patentansprüche

1. Mobiler Container (1) zum Laden zumindest einer Batterie (2), mit einer Einhausung (3), die einen Laderaum (4) begrenzt und eine verschließbare Ladeöffnung (5) aufweist,
einem im Laderaum (4) angeordneten Batterieladeplatz (10), der eine Aufnahme (11) für
einen Energiewandler (12) und eine Batterieaufnahme (13) aufweist, in die eine Batterie (2) über die Ladeöffnung (5) einbringbar ist.

2. Mobiler Container (1) nach Anspruch 1 , **dadurch gekennzeichnet, dass** eine Lüftungsanlage (20) vorgesehen ist, um während des Ladevorganges der Batterie (2) entstehende Gase aus dem Laderaum (4) abzusaugen, insbesondere dass die Lüftungsanlage (20) einen Abluftbereich (21) und einen Zuluftbereich (23) aufweist, wobei zumindest der Abluftbereich (21) einen Lüfter (22) zur aktiven Absaugung aufweist.

3. Mobiler Container (1) nach Anspruch 1 oder 2 , **dadurch gekennzeichnet, dass** die Lüftungsanlage (20) derart im Laderaum (4) positioniert und ausgebildet ist, dass eine Querbelüftung des Laderaumes (4) erzielbar ist.

4. Mobiler Container (1) nach einem der vorhergehenden Ansprüche, **dadurch gekennzeichnet, dass** ein Energieversorgungssystem (30) innerhalb des Laderaumes (4) angeordnet ist, der mit dem Energiewandler (12) elektrisch verbindbar ist.

5. Mobiler Container (1) nach einem der vorhergehenden Ansprüche, **dadurch gekennzeichnet, dass** die Lüftungsanlage (20) eine Überwachungseinheit (24) aufweist, um eine Luftströmung in der Lüftungsanlage (20) zu überprüfen.

6. Mobiler Container (1) nach Anspruch 5 , **dadurch gekennzeichnet, dass** die Überwachungseinheit (24) einen Sensor aufweist, wodurch bei einer Grenzwertunterschreitung der Luftströmung das Energieversorgungssystem (30) stromlos geschaltet wird.

7. Mobiler Container (1) nach einem der vorhergehenden Ansprüche, **dadurch gekennzeichnet, dass** eine Gasüberwachungseinheit (40) im Laderaum (4) vorgesehen ist, um eine Explosionsfähigkeit eines Gas-Luft-Gemisches innerhalb des Laderaumes (4) zu detektieren, insbesondere dass bei Erreichen eines Gas-Luft-Gemisch-Grenzwertes das Energieversorgungssystem (30) stromlos geschaltet wird.

8. Mobiler Container (1) nach einem der vorhergehenden Ansprüche, **dadurch gekennzeichnet, dass** die Einhausung (3) einen Alarmgeber (35) aufweist, um ein optisches und/oder akustisches Signal abzugeben, insbesondere dass der Alarmgeber (35) mit der Gasüberwachungseinheit (40) und/oder der Überwachungseinheit (24) in Signalverbindung steht.

9. Mobiler Container (1) nach Anspruch 7 oder 8 , **dadurch gekennzeichnet, dass** bei der Grenzwertunterschreitung der Luftströmung das optische und/oder akustische Signal abgegeben wird.

10. Mobiler Container (1) nach einem der vorhergehenden Ansprüche, **dadurch gekennzeichnet, dass** die Batterieaufnahme (13) eine Auflagefläche (14) für die Batterie (2) aufweist, die es ermöglichst, translatorisch die Batterie (2) in der Batterieaufnahme (13) zu bewegen, insbesondere dass die Auflagefläche (14) beweglich gelagerte Transportelemente (15) aufweist.

11. Mobiler Container (1) nach Anspruch 10 , **dadurch gekennzeichnet, dass** das Transportelement (15) zylindrisch ausgebildet ist.

12. Mobiler Container (1) nach einem der vorhergehenden Ansprüche, **dadurch gekennzeichnet, dass** der Laderaum (4) ein Klimagerät (60) aufweist, wobei insbesondere das Klimagerät (60) derart ausgebildet ist, dass der Laderaum (4) auf eine Temperatur von zwischen 5°C und 30°C einstellbar ist.

13. Mobiler Container (1) nach einem der vorhergehenden Ansprüche, **dadurch gekennzeichnet, dass** unterhalb der Batterieaufnahme (13) eine Auffangvorrichtung (6) angeordnet ist, um eventuell austretendes Medium aus der Batterie (2) und/oder dem Energiewandler (12) aufzufangen, insbesondere das die Auffangvorrichtung (6) aus Kunststoff ausgeführt ist.

14. Mobiler Container (1) nach einem der vorhergehenden Ansprüche, **dadurch gekennzeichnet, dass** ein Schließelement (7) vorgesehen ist, um die Ladeöffnung (5) zu schließen und zu öffnen, insbesondere dass das Schließelement (7) eine Schiebetür oder ein Rolltor oder eine Flügeltür ist.

15. Mobiler Container (1) nach einem der vorhergehenden Ansprüche, **dadurch gekennzeichnet, dass** der Batterieladeplatz (10) ein Bodenelement (16) aufweist, auf dass das Energiewandler (12) positionierbar ist, wobei insbesondere das Bodenelement (16) oberhalb der Batterieaufnahme (13) angeordnet ist.

16. Mobiler Container (1) nach einem der vorhergehenden Ansprüche, **dadurch gekennzeichnet, dass** das Energieversorgungssystem (30) ein Schienenelement (31) aufweist, das zur elektrischen Versorgung des Energiewandlers (12) dient, insbesondere dass das Bodenelement (16) zwischen dem Schienenelement (31) und der Batterieaufnahme (13) angeordnet ist.

17. Mobiler Container (1) nach einem der vorhergehenden Ansprüche, **dadurch gekennzeichnet, dass** der Laderaum (4) eine Wassernachfüllstation (50) aufweist.

18. Mobiler Container (1) nach einem der vorhergehenden Ansprüche, **dadurch gekennzeichnet, dass** der Batterieladeplatz (10) ein Sicherungselement (17) aufweist, um eine Rückwand (8) der Einhausung (3) zu schützen.

19. Mobiler Container (1) nach einem der vorhergehenden Ansprüche, **dadurch gekennzeichnet, dass** eine Löschvorrichtung (70) innerhalb des Laderaumes (4) vorgesehen ist, insbesondere dass die Löschvorrichtung (70) als Sprinkleranlage ausgeführt ist.

20. Mobiler Container (1) nach einem der vorhergehenden Ansprüche, **dadurch gekennzeichnet, dass** ein regeneratives Energiesystem (80) vorgesehen ist, das mit dem Energieversorgungssystem (30) und/oder dem Energiewandler (12) verbunden ist, insbesondere dass das regeneratives Energiesystem (80) auf dem Dach (9) der Einhausung (3) angeordnet ist.

21. Mobiler Container (1) nach einem der vorhergehenden Ansprüche, **dadurch gekennzeichnet, dass** ein Anzeigeelement (33) vorgesehen ist, das eine Belegung oder Nichtbelegung des Batterieladeplatzes (10) mit einer Batterie (2) anzeigt und/oder den Ladezustand der Batterie (2) anzeigt.

22. Mobiler Container (1) nach einem der vorhergehenden Ansprüche, **dadurch gekennzeichnet, dass** das Anzeigeelement (33) im Laderaum (4) oder außerhalb des Laderaumes (4) an der Einhausung (3) angeordnet ist.

23. Mobiler Container (1) nach einem der vorhergehenden Ansprüche, **dadurch gekennzeichnet, dass** eine Steuereinheit (34) vorgesehen ist, die mit dem Energieversorgungssystem (30) und/oder der Lüftungsanlage (20) und/oder der Überwachungseinheit (24) und/oder dem Anzeigeelement (33) und/oder dem Alarmgeber (35) und/oder der Gasüberwachungseinheit (40) und/oder dem Klimagerät (60) und/oder der Löschvorrichtung (70) und/oder dem regenerativen Energiesystem (80) in Signalverbindung steht.

24. Mobiler Container (1) nach einem der vorhergehenden Ansprüche, **dadurch gekennzeichnet, dass** an der Einhausung (3) eine Sende- und/oder Empfangseinheit (110) angeordnet ist, die insbesondere mit der Steuereinheit (34) und/oder dem Energieversorgungssystem (30) und/oder der Lüftungsanlage (20) und/oder der Überwachungseinheit (24) und/oder dem Anzeigeelement (33) und/oder dem Alarmgeber (35) und/oder der Gasüberwachungseinheit (40) und/oder dem Klimagerät (60) und/oder der Löschvorrichtung (70) und/oder dem regenerativen Energiesystem (80) in Signalverbindung steht.

25. Mobiler Container (1) nach einem der vorhergehenden Ansprüche, **dadurch gekennzeichnet, dass** das eine Vielzahl an Batterieladeplätzen (10) innerhalb des Laderaumes (4) vorgesehen sind.

26. System (100) mit mehreren mobilen Containern (1) nach einem der vorhergehenden Ansprüche, wobei eine Hauptsteuerung (36) vorgesehen ist, die mit zumindest einer Sende- und/oder Empfangseinheit (110) eines jeden Containers (1) oder mit der Steuereinheit (34) eines jeden Containers (1) in Datenkommunikation steht.
